# EUROPÄISCHE PATENTSCHRIFT

(11) **EP 1 274 077 B1**
(45) Veröffentlichungstag und Bekanntmachung des Hinweises auf die Patenterteilung: **10.01.2007**
(21) Anmeldenummer: 02011769.3
(22) Anmeldetag: 27.05.2002
(51) Int. Cl.: G11B 17/04, G11B 33/02

(54) **Elektrisches Informationsgerät**
Electrical information apparatus
Appareil d'information électrique

(30) Priorität: 07.07.2001 DE 10133128
(43) Veröffentlichungstag der Anmeldung: 08.01.2003
(73) Patentinhaber: SIEMENS AKTIENGESELLSCHAFT, 80333 München (DE)
(72) Erfinder: Lauth, Stephan, 35614 Asslar (DE); Nau, Dieter, 35580 Wetzlar (DE)

(56) Entgegenhaltungen:
- EP-A- 0 991 067
- WO-A-95/12336
- GB-A- 2 344 753
- US-A- 5 532 466
- US-A- 5 793 728
- US-A- 5 820 236
- "FILE ANTI-CONTAMINATION DOORS" IBM TECHNICAL DISCLOSURE BULLETIN, IBM CORP. NEW YORK, US, Bd. 33, Nr. 3A, 1. August 1990 (1990-08-01), Seiten 140-142, XP000123879 ISSN: 0018-8689

## Beschreibung

Die Erfindung bezieht sich auf ein elektrisches Informationsgerät mit einem Laufwerk für Informationsträger in Form von umlauffähigen Platten, insbesondere CD-Platten, das mit einem dem Abspielen der Platten dienenden Betriebsraum versehen ist, in den die Platten in einer Bewegungsebene längs der Plattenebene durch eine den Betriebsraum nach außen begrenzende Schlitzöffnung ein- und ausführbar sind, wobei die Schlitzöffnung durch Schließmittel verschließbar ist, wobei die Schlitzöffnung durch eine quer zur Bewegungsrichtung der Platte sich erstreckende gummielastische Lippe verschließbar ist, die mit ihrer einen Längsseite an einem Längsrand der Schlitzöffnung angeordnet ist und mit ihrer anderen Längsseite frei zum anderen Längsrand der Schlitzöffnung ragt und wobei an beiden Längsrändern der Schlitzöffnung jeweils eine gummielastische Lippe angeordnet ist.

Bei derartigen elektrischen Informationsgeräten ist es insbesondere dann erforderlich das Eindringen von Schmutz in den Betriebsraum auf Dauer sicher zu stellen, wenn das elektrische Informationsgerät ein Teil einer Navigationseinrichtung in einem Kraftfahrzeug ist und die Funktionssicherheit über die Lebensdauer des Kraftfahrzeugs gewährleistet werden muß. Auch nur geringe Verschmutzungen auf einer Straßeninformationen enthaltenden CD führen zu Verfälschungen der von der CD entnommenen Daten und somit zu Fehlinformationen des Navigationssystems.

Aus der IBM Technical Disclosure Bulletin, IBM Corp. New York, Us (01-08-1990), 33(3a), 140-142 ist ein elektrisches Informationsgerät mit den Merkmalen des Oberbegriffs des Anspruchs 1 bekannt.

In diesem gerät sind an der Schlitzöffnung zwei Lippen mit ihren freien Enden einander zugewandt angeordnet. Etwa in der Bewegungsebene der Platte überlappen sich die beiden Lippen. Diese beiden Lippen sind derart mit unterschiedlichen Querschnitt und unterschiedlicher Elastizität aufgebaut, daß bei einem Einführen der Platte eine unterschiedliche Öffnungsbewegung durchführen.

Aus der US-A-5 820 236 ist ein elektrisches Informationsgerät der eingangs genanten Art bekannt, wobei eine einseitig angeordnete und sich über die gesamte Schlitzöffnung erstreckende Lippe über ihre ganze Erstreckung gleichen Querschnitt besitzt.

Ein elektrisches Informationsgerät der eingangs genannten Art mit einander gegenüberliegenden Lippen gleichen Querschnitts über ihre ganze Erstreckung ist aus der EP-A-0 991 067 bekannt.

Aufgabe der Erfindung ist es, ein elektrisches Informationsgerät der eingangs genannten Art zu schaffen, das bei einfachem Aufbau ein hohes Maß an Sicherheit gegen das Verschmutzen der CD-Platten und das Eindringen von Schmutz in den Betriebsraum des elektrischen Informationsgeräts gewährleistet und die Platte beim Ein- und Ausführen in die korrekte Bewegungsebene leitet.

Diese Aufgabe wird erfindungsgemäß dadurch gelöst, daß die Lippe einen von der Schlitzöffnung zu ihrem freien Ende hin sich verjüngenden Querschnitt besitzt und die einander zugewandten freien Enden der beiden Lippen sich in der Bewegungsebene der Platte zumindest annähernd berühren.
Diese Ausbildung hat den Vorteil, daß sie völlig unempfindlich gegen Feuchtigkeit ist. Darüber hinaus führt die größere Härte des gummielastischen Werkstoffs auch dazu, daß praktisch keine Abnutzung entsteht und somit eine hohe Lebensdauer der gummielastischen Lippe gewährleistet ist. Die gummielastische Lippe leistet nur einen geringen Widerstand durch elastische Verformung beim Einführen und Ausführen der Platte, nimmt aber unmittelbar nach einem solchen Vorgang wieder ihre korrekte Schließstellung ein und verhindert so das Eindringen von Schmutz.

Beim Ein- und Ausführen der Platte ist nur ein relativ geringer Widerstand zu überwinden. Darüber hinaus wird durch diese Form eine rampenartige Führung gebildet, die die Platte beim Ein- und Ausführen in die korrekte Bewegungsebene leitet.

Ein besonders geringer Widerstand beim Ein- und Ausführen ist zu überwinden, wenn die freie Längsseite der Lippe schneidenartig ausgebildet ist.

Vorzugsweise besitzt die Lippe einen etwa dreieckförmigen Querschnitt.

Besitzt die Lippe zwischen ihrer freien Längsseite und dem Längsrand der Schlitzöffnung eine Querschnittsverengung, so erfolgt eine Verformung beim Ein- und Ausführen der Platte im wesentlichen in dem Bereich der Querschnittsverengung und nicht im Lippenendbereich. Dadurch wird die Belastung im Lippenendbereich gering gehalten.
Vorzugsweise besteht die Lippe aus einem thermoplastischen Elastomer und ist somit auf einfache Weise herstellbar sowie behält ihr elastisches Verhalten auf lange Dauer bei.

Der Längsrand der Schlitzöffnung kann von einem feststehenden Frontbügel gebildet sein. Ist dabei die Lippe durch Spritzgießen an den Frontbügel angespritzt, so werden keine separaten Trägerteile für die Lippe benötigt, was auch den Montageaufwand erheblich reduziert.

Die Lippe kann eine glatte Oberfläche aufweisen. Das führt dazu, daß sich kein Schmutz an der Oberfläche der Lippe festsetzen und von dort auf die Platte übertragen kann. Außerdem ist eine derartige Oberfläche der Lippe wasserabweisend und leicht abwaschbar.

Zur sicheren Führung der Platte kann zwischen der Schlitzöffnung und dem Betriebsraum eine Überbrückungsführung angeordnet sein, deren Führungsebene sich in der Bewegungsebene der Platte erstreckt. Dabei kann die Überbrückungsführung auch eine im Abstand etwa einer Plattendicke über der Führungsebene angeordnete Oberseitenführung aufweisen.

Ist die Überbrückungsführung ganz oder teilweise einteilig mit der oder den Lippen ausgebildet, so führt dies zu einer erheblichen Reduzierung der Bauteile und damit auch des Montageaufwands.

Eine einfache Möglichkeit zur Beleuchtung der Schlitzöffnung besteht darin, daß die Lippe als Lichtleiter ausgebildet ist, in den von einer Lichtquelle Licht einleitbar ist.

Eine weitere, ebenfalls einfache Beleuchtung der Schlitzöffnung wird dadurch erreicht, daß die dem Betriebsraum abgewandte Seite der Lippe von einer Lichtquelle lichtbeaufschlagbar ist, wobei die Beleuchtung der Schlitzöffnung noch verstärkt werden kann, wenn die dem Betriebsraum abgewandte Fläche der Lippe lichtreflektierend ausgebildet ist.

Zur Reduzierung von Bauteilen dient es ebenfalls, wenn die Frontblende als Lichtleiter ausgebildet ist, in den von einer Lichtquelle Licht einleitbar und von der das Licht auf die dem Betriebsraum abgewandte Fläche der Lippe diese Lippe beaufschlagend auskoppelbar ist.

Ein Ausführungsbeispiel der Erfindung ist in der Zeichnung dargestellt und wird im folgenden näher beschrieben. Es zeigen
Figur 1 eine Frontansicht auf den Einführbereich eines elektrischen Informationsgeräts
Figur 2 einen Querschnitt des Einführbereichs nach Figur 1 entlang der Linie A-A
Figur 3 a den Bereich der elastischen Lippen des Einführbereichs in Figur 2 im Schnitt mit einführender Platte

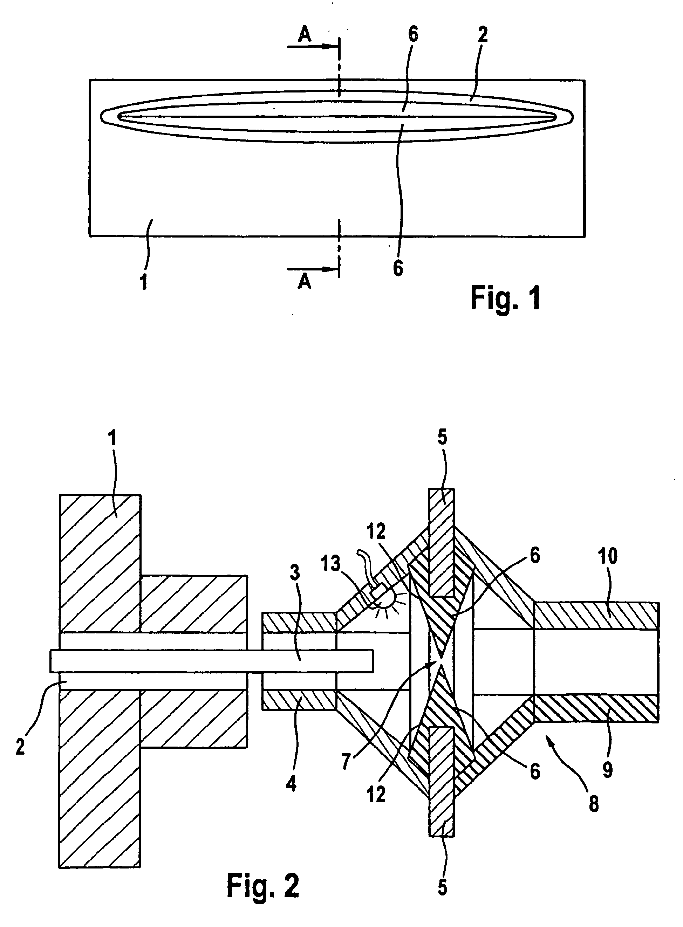

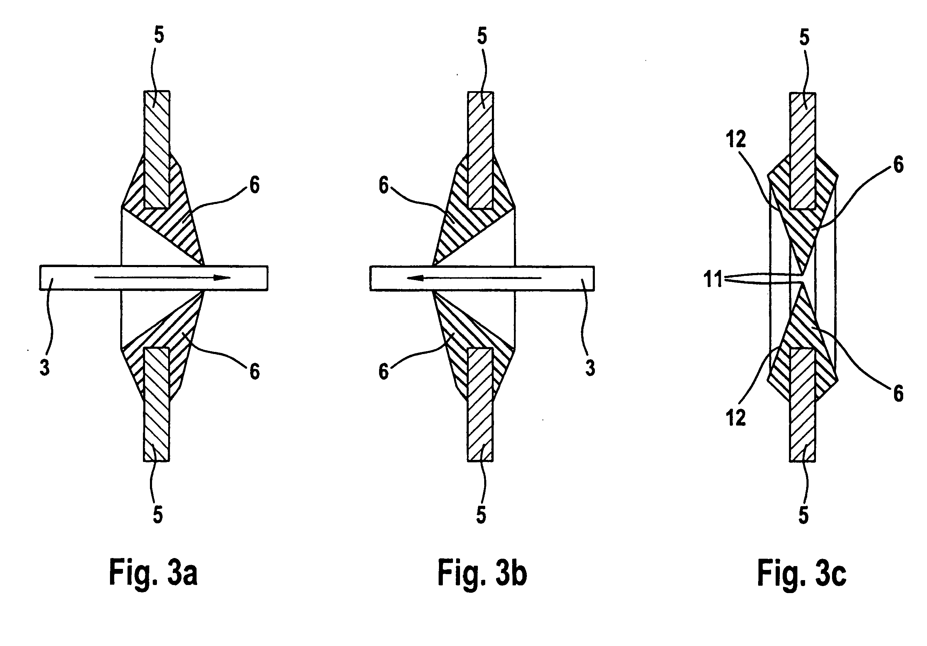

Figur 3 b den Bereich der elastischen Lippen des Einführbereichs in Figur 2 im Schnitt mit ausführender Platte
Figur 3 c den Bereich der elastischen Lippen des Einführbereichs in Figur 2 im Schnitt in Schließstellung

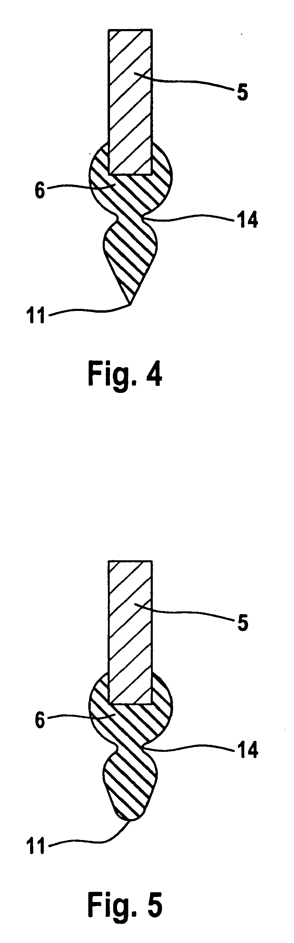

Figur 4 eine zweite Ausführungsform einer elastischen Lippe im Schnitt
Figur 5 eine dritte Ausführungsform einer elastischen Lippe im Schnitt.

In den Figuren 1 und 2 ist der Einführungsbereich eines Informationsgeräts mit einer Frontblende 1 dargestellt, die einen Einführschacht 2 zum Einführen von CD-ROM's 3 besitzt.

Hinter der Frontblende 1 wird die CD-ROM in einer CD-Führung 4 weiter in den Bereich eines Frontbügels 5 mit daran angeordneten elastischen Lippen 6 geführt.
In dem Frontbügel 5 ist eine Schlitzöffnung 7 ausgebildet, an deren beiden waagrechten Längsrändern jeweils eine der gummielastischen Lippen 6 angeordnet ist, wobei die einander zugewandten freien Enden der beiden Lippen 6 sich in der Bewegungsebene der CD-ROM 3 annähernd berühren, wenn keine CD-ROM 3 hindurchgeführt wird.

In Einführbewegungsrichtung hinter dem Frontbügel 5 ist eine Überbrückungsführung 8 angeordnet, die eine Führungsebene 9 besitzt, welche sich in der Bewegungsebene der CD-ROM 3 erstreckt und die eine im Abstand etwa einer CD-ROM-Dicke über der Führungsebene 9 angeordnete Oberseitenführung 10 aufweist.

Der Überbrückungsführung 8 schließt sich ein nicht dargestellter Betriebsraum des elektrischen Informationsgeräts an, in dem ein Laufwerk angeordnet ist, in dem die CD-ROM's 3 abgespielt werden.

Die Lippen 6 bestehen aus einem thermoplastischen Elastomer und sind durch Spritzgießen an den Längsrand der Schlitzöffnung 7 des Frontbügels 5 angeformt. Dabei ist einteilig auch die Führungsebene 9 der Überbrückungsführung 8 mit angespritzt, so daß nur wenige leicht herstellbare und einen geringen Montageaufwand erfordernde Bauteile benötigt werden.

Die Lippen 6 bilden einen dreieckförmigen Querschnitt, der sich von der Schlitz-öffnung 7 her zum freien Ende der Lippe 6 hin verjüngt, wobei die freie Längsseite 11 der Lippe 6 schneidenartig ausgebildet ist.

Die Lippe 6 besitzt eine glatte Oberfläche, die auf der dem Betriebsraum abgewandten Seite 12 lichtreflektierend ausgebildet ist.

An der CD-Führung 4 ist außerhalb des Bereichs, durch den die CD-ROM 3 bewegt wird, eine Lichtquelle 13 angeordnet, die die Seiten 12 der Lippe 6 mit Licht beaufschlagt, so daß dieser Bereich beleuchtet ist und eine Orientierung beim Einführen einer CD-ROM 3 geben kann.

Wie die Figuren 3 a bis 3 c zeigen, werden beim Einführen und Ausführen der CD-ROM 3 die Lippen 6 derart elastisch verformt, daß die CD-ROM 3 zwischen den freien Längsseiten 11 der Lippen 6 hindurchgeführt werden kann. Ist dieser Durchführvorgang beendet, bewegen sich die Lippen 6 aufgrund ihrer elastischen Eigenschaften wieder in ihre Neutralstellung und verschließen so die Schlitzöffnung 7.

In den Figuren 4 und 5 sind weitere Ausführungsformen einer Lippe 6 dargestellt, die beide zwischen ihren freien Längsseiten 11 und dem Längsrand der Schlitzöffnung 7 eine Querschnittsverengung 14 besitzen. Diese Querschnittsverengung 14 führt dazu, daß die Biegeverformung der Lippe 6 hauptsächlich im Bereich der Querschnittsverengung 14 und nicht im Bereich der empfindlichen freien Längsseite 11 erfolgt. Dies ermöglicht es auch die freie Längsseite 11 nicht nur mit schneidenartig verjüngtem Querschnitt wie in Figur 4, sondern auch, wie Figur 5 zeigt, mit einem weniger empfindlichen runden Querschnitt auszubilden.

## Patentansprüche

1. Elektrisches Informationsgerät mit einem Laufwerk für Informationsträger in Form von umlauffähigen Platten, insbesondere CD-Platten, das mit einem dem Abspielen der Platten dienenden Betriebsraum versehen ist, in den die Platten in einer Bewegungsebene längs der Plattenebene durch eine den Betriebsraum nach außen begrenzende Schlitzöffnung ein- und ausführbar sind, wobei die Schlitzöffnung durch Schließmittel verschließbar ist, wobei die Schlitzöffnung durch quer zur Bewegungsrichtung der Platte sich erstreckende gummielastische Lippe verschließbar ist, die mit ihrer einen Längsseite an einem Längsrand der Schlitzöffnung angeordnet ist und mit ihrer anderen Längsseite frei zum anderen Längsrand der Schlitzöffnung ragt und wobei an beiden Längsrändern der Schlitzöffnung jeweils eine gummielastische Lippe angeordnet ist, **dadurch gekennzeichnet, daß** die Lippen (6) einen von der Schlitzöffnung zu ihrem freien Ende hin sich verjüngenden Querschnitt besitzen und die einander zugewandten freien Enden der beiden Lippen sich in der Bewegungsebene der Platte zumindest annähernd berühren.

2. Elektrisches Informationsgerät nach einem der vorhergehenden Ansprüche, **dadurch gekennzeichnet, daß** die freie Längsseite (11) der Lippe (6) schneidenartig ausgebildet ist.

3. Elektrisches Informationsgerät nach einem der vorhergehenden Ansprüche, **dadurch gekennzeichnet, daß** die Lippe (6) einen etwa dreieckförmigen Querschnitt besitzt.

4. Elektrisches Informationsgerät nach einem der vorhergehenden Ansprüche, **dadurch gekennzeichnet, daß** die Lippe (6) zwischen ihrer freien Längsseite (11) und dem Längsrand der Schlitzöffnung (7) eine Querschnittsverengung (14) besitzt.

5. Elektrisches Informationsgerät nach einem der vorhergehenden Ansprüche, **dadurch gekennzeichnet, daß** die Lippe (6) aus einem thermoplastischen Elastomer besteht.

6. Elektrisches Informationsgerät nach einem der vorhergehenden Ansprüche, **dadurch gekennzeichnet, daß** der Längsrand der Schlitzöffnung (7) von einem feststehenden Frontbügel (5) gebildet ist.

7. Elektrisches Informationsgerät nach Anspruch 5 und 6, **dadurch gekennzeichnet, daß** die Lippe (6) durch Spritzgießen an den Frontbügel (5) angespritzt ist.

8. Elektrisches Informationsgerät nach einem der vorhergehenden Ansprüche, **dadurch gekennzeichnet, daß** die Lippe (6) eine glatte Oberfläche aufweist.

9. Elektrisches Informationsgerät nach einem der vorhergehenden Ansprüche, **dadurch gekennzeichnet, daß** zwischen der Schlitzöffnung (7) und dem Betriebsraum eine Überbrückungsführung (8) angeordnet ist, deren Führungsebene (9) sich in der Bewegungsebene der Platten erstreckt.

10. Elektrisches Informationsgerät nach Anspruch 9, **dadurch gekennzeichnet, daß** die Überbrückungsführung (8) eine im Abstand etwa einer Plattendicke über der Führungsebene (9) angeordnete Oberseitenführung (10) aufweist.

11. Elektrisches Informationsgerät nach einem der Ansprüche 9 und 10, **dadurch gekennzeichnet, daß** die Überbrückungsführung (8) einteilig mit der oder den Lippen (6) ausgebildet ist.

12. Elektrisches Informationsgerät nach einem der vorhergehenden Ansprüche, **dadurch gekennzeichnet, daß** die Lippe als Lichtleiter ausgebildet ist, in den von einer Lichtquelle Licht einleitbar ist.

13. Elektrisches Informationsgerät nach einem der Ansprüche 1 bis 11, **dadurch gekennzeichnet, daß** die dem Betriebsraum abgewandte Seite der Lippe (6) von einer Lichtquelle (13) lichtbeaufschlagbar ist.

14. Elektrisches Informationsgerät nach Anspruch 13, **dadurch gekennzeichnet, daß** die dem Betriebsraum abgewandte Fläche der Lippe (6) lichtreflektierend ausgebildet ist.

15. Elektrisches Informationsgerät nach einem der Ansprüche 12 bis 14, **dadurch gekennzeichnet, daß** die Frontblende als Lichtleiter ausgebildet ist, in die von einer Lichtquelle Licht einleitbar und von der das Licht auf die dem Betriebsraum abgewandte Fläche der Lippe diese Lippe beaufschlagend auskoppelbar ist.

## Claims

1. Electrical information device with a drive for information carriers in the form of disks which can rotate, in particular CD disks, which is equipped with an operational space serving for playback of the disks, in which space the disks can be inserted and removed in a movement plane along the disk plane through a slit opening which is the external limit of the operational space, the slit opening being sealable with closing means, the slit opening being sealable with a rubber elastic lip extending crosswise to the direction of movement of the disk, one long side of this lip being disposed on one long edge of the slit opening and the other long side freely extending to the other long edge of the slit opening, and a rubber elastic lip being disposed on each of the long edges of the slit opening, **characterized in that** the lips (6) have a cross section tapering from the slit opening to their free end, and the facing free ends of the two lips at least approximately touch each other in the movement plane of the disk.

2. Electrical information device according to one of the preceding claims, **characterized in that** the free long side (11) of the lip (6) is formed in a sharply cut manner.

3. Electrical information device according to one of the preceding claims, **characterized in that** the lip (6) has an approximately triangular cross section.

4. Electrical information device according to one of the preceding claims, **characterized in that** the lip (6) has a reduction in cross section area (14) between its free long side (11) and the long edge of the slit opening (7).

5. Electrical information device according to one of the preceding claims, **characterized in that** the lip (6) consists of a thermoplastic elastomer.

6. Electrical information device according to one of the preceding claims, **characterized in that** the long edge of the slit opening (7) is formed by a fixed front frame (5).

7. Electrical information device according to Claim 5 and 6, **characterized in that** the lip (6) is sprayed on to the front frame (5) by injection moulding.

8. Electrical information device according to one of the preceding claims, **characterized in that** the lip (6) has a smooth surface.

9. Electrical information device according to one of the preceding claims, **characterized in that** between the slit opening (7) and the operational space a bridging guide (8) can be disposed, its guide plane (9) extending in the movement plane of the disks.

10. Electrical information device according to Claim 9, **characterized in that** the bridging guide (8) has an upper side guide (10) disposed above the guide plane (9) at a distance of about a disk thickness.

11. Electrical information device according to one of Claims 9 and 10, **characterized in that** the bridging guide (8) is formed as a single piece with the lip or lips (6).

12. Electrical information device according to one of the preceding claims, **characterized in that** the lip is formed as an optical waveguide, into which light can be conducted from a light source.

13. Electrical information device according to one of Claims 1 to 11, **characterized in that** the side of the lip (6) facing away from the operational space can be struck by light from a light source (13).

14. Electrical information device according to Claim 13, **characterized in that** the surface of the lip (6) facing away from the operational space is designed to be light-reflecting.

15. Electrical information device according to one of Claims 12 to 14, **characterized in that** the front plate is designed as an optical waveguide, into which light can be conducted from a light source, and from which the light can be linked to strike the lip on the surface of the lip facing away from the operational space.

## Revendications

1. Appareil électrique d'information comportant un lecteur de supports d'information ayant la forme de disques tournants, notamment de disques compacts ou cédérom, ledit appareil étant doté d'un espace de fonctionnement servant à lire les disques, dans lequel les disques peuvent être introduits et duquel les disques peuvent être extraits, dans un plan de déplacement le long du plan des disques, à travers une ouverture en fente limitant l'espace de fonctionnement vers l'extérieur, où l'ouverture en fente peut être obturée par des moyens de fermeture, où l'ouverture en fente peut être obturée par une lèvre souple comme du caoutchouc perpendiculaire à la direction de déplacement du disque, l'un des côtés longitudinaux de ladite lèvre étant placé sur un bord longitudinal de l'ouverture en fente et l'autre côté longitudinal faisant librement saillie vers l'autre bord longitudinal de l'ouverture en fente et une lèvre souple comme du caoutchouc étant disposée sur les deux bords longitudinaux de l'ouverture en fente , **caractérisé par le fait que** les lèvres (6) ont une section transversale qui s'amincit en partant de l'ouverture en fente vers leur extrémité libre et que les extrémités libres des deux lèvres se faisant réciproquement face se touchent au moins approximativement dans le plan de déplacement du disque.

2. Appareil électrique d'information selon l'une des revendications précédentes, **caractérisé par le fait que** le côté longitudinal libre (11) de la lèvre (6) est configuré dans le genre d'une arête vive.

3. Appareil électrique d'information selon l'une des revendications précédentes, **caractérisé par le fait que** la lèvre (6) a une section transversale à peu près triangulaire.

4. Appareil électrique d'information selon l'une des revendications précédentes, **caractérisé par le fait que** la lèvre (6) a une section transversale qui s'amincit entre son côté longitudinal libre (11) et le bord longitudinal de l'ouverture en fente (7).

5. Appareil électrique d'information selon l'une des revendications précédentes, **caractérisé par le fait que** la lèvre (6) se compose d'un élastomère thermoplastique.

6. Appareil électrique d'information selon l'une des revendications précédentes, **caractérisé par le fait que** le bord longitudinal de l'ouverture en fente (7) est formé par un étrier avant (5) fixe.

7. Appareil électrique d'information selon la revendication 5 et 6, **caractérisé par le fait que** la lèvre (6) est formée à l'aide d'un procédé de moulage par injection sur l'étrier avant (5).

8. Appareil électrique d'information selon l'une des revendications précédentes, **caractérisé par le fait que** la lèvre (6) a une surface lisse.

9. Appareil électrique d'information selon l'une des revendications précédentes, **caractérisé par le fait qu'**un guide intermédiaire (8) est disposé entre l'ouverture en fente (7) et l'espace de fonctionnement, le plan de guidage (9) dudit guide intermédiaire se trouvant dans le plan de déplacement des disques.

10. Appareil électrique d'information selon la revendication 9, **caractérisé par le fait que** le guide intermédiaire (8) comporte un guidage (10) de la face supérieure placé, au-dessus du plan de guidage (9), à une distance approximativement égale à l'épaisseur d'un disque.

11. Appareil électrique d'information selon l'une des revendications 9 et 10, **caractérisé par le fait que** le guide intermédiaire (8) est formé en une seule pièce avec la ou les lèvres (6).

12. Appareil électrique d'information selon l'une des revendications précédentes, **caractérisé par le fait que** la lèvre est conçue comme guide d'ondes lumineuses dans lequel il est possible d'introduire la lumière d'une source lumineuse.

13. Appareil électrique d'information selon l'une des revendications 1 à 11, **caractérisé par le fait que** le côté de la lèvre (6) opposé à l'espace de fonctionnement peut recevoir la lumière provenant d'une source lumineuse (13).

14. Appareil électrique d'information selon la revendication 13, **caractérisé par le fait que** la surface de la lèvre (6) opposée à l'espace de fonctionnement réfléchit la lumière.

15. Appareil électrique d'information selon l'une des revendications 12 à 14, **caractérisé par le fait que** le cache avant est conçu sous la forme d'un guide d'ondes lumineuses dans lequel il est possible d'introduire la lumière d'une source lumineuse et à partir duquel il est possible de découpler et de l'envoyer la lumière sur la surface de la lèvre opposée à l'espace de fonctionnement.
